# EUROPÄISCHE PATENTANMELDUNG

(11) **EP 2 704 076 A1**
(43) Veröffentlichungstag der Anmeldung: **05.03.2014**
(21) Anmeldenummer: 12182962.6
(22) Anmeldetag: 04.09.2012
(51) Int. Cl.: G06Q 20/30

(54) **Automat für Internetzahlung**

(71) Anmelder: Scheidt & Bachmann GmbH, 41238 Mönchengladbach (DE)
(72) Erfinder: Miller, Norbert, 41063 Mönchengladbach (DE); Augustyniak, Matthias, 41844 Wegberg (DE)
(74) Vertreter: Stenger, Watzke & Ring

(57) **Zusammenfassung**

Die Erfindung betrifft ein Verfahren zur Nutzung eines Automaten (21) durch einen Nutzer (20) zur Durchführung eines Zahlungsvorgangs für einen Internetkauf zwischen dem Nutzer (20) und einem E-Commerce-Anbieter (26).

## Beschreibung

Die Erfindung betrifft ein Verfahren zur Nutzung eines Automaten durch einen Nutzer zur Durchführung eines Zahlungsvorganges beispielsweise für Dienstleistungen oder Waren, die im Internet gekauft wurden (Internetkauf).

Das Handeln mit Dienstleistungen und Waren im Internet (E-Commerce genannt) wird heute von Verbrauchern sehr geschätzt, da es unabhängig von den Geschäftsöffnungszeiten und bequem von zu Hause aus erledigt werden kann. So existieren bereits eine Vielzahl von Internetshops wie beispielsweise Amazon, Ebay, iTunes und eine Vielzahl von Internetshops weiterer Anbieter. Der Internetkauf erfolgt dabei so, dass der Nutzer ein oder mehrere Produkte auswählt und dem Verkäufer zum Zwecke der Bezahlung seine Bankkonto-, Kreditkarten- oder ec-Kartennummer angibt. Die vom Nutzer angegebenen Bankdaten werden sogleich durch ein Hintergrundsystem der E-Commerce-Internetseite dahingehend geprüft, ob beispielsweise die Bankverbindung oder auch eine Kreditkarte unter dieser angegebenen Nummer existiert. Sofern diese sogenannte Autorisierung positiv ist, kommt der Kauf im Internet zustande.

Da viele potentielle Kunden jedoch die eigene Bankkonto- oder Kreditkartenummer nicht dem E-Commerce-Anbieter im Internet zur Verfügung stellen möchten, beispielsweise aus Datenschutzgründen oder auch weil sie nicht über ein Konto oder über eine Kreditkarte verfügen, gibt es im Stand der Technik eine Reihe sogenannter Prepaid-Schemes, bei welchen so genannte "Prepaid-Karten" mit Bargeld an Verkaufsstellen aufgeladen werden können. Hier sei beispielshaft die PaySafeCard genannt, welche im Einzelhandel zu erwerben ist. Nach dem gleichen Prinzip funktionieren auch die U-Kash-Card sowie die 3V Cash-Card. Daneben gibt es mittlerweile auch Prepaid-Produkte von den Kreditkartenanbietern selbst, z.B. MasterCard oder Visa, die im Einzelhandel und an Tankstellen erhältlich sind und im E-Commerce fast überall dort verwendet werden können, wo Kreditkarten akzeptiert werden. Diesen Karten ist gemeinsam, dass der Kunde vorab einen Geldbetrag bezahlt, um die Karte aufzuladen, d.h. den Geldbetrag des Bargeldes in elektronisches Geld umwandelt, mit welchem er dann Internetkäufe tätigen kann. Der Begriff "elektronisches Geld" bezeichnet dabei einen monetären Wert in Form einer Forderung gegen die ausgebende Stelle, welcher Wert auf einem Datenträger gespeichert ist, welcher Wert gegen Entgegennahme eines Geldbetrags, dessen Wert nicht geringer ist als der ausgegebene monetäre Wert, ausgegeben wird und welcher Wert von anderen Unternehmen als der ausgebenden Stelle als Zahlungsmittel akzeptiert wird.

Ausgehend von dem vorgenannten Stand der Technik ist es nunmehr Aufgabe der Erfindung, ein alternatives Verfahren zur Durchführung eines Zahlungsvorgangs für einen Internetkauf zu schaffen, welcher auch unabhängig von den vorgenannten PrepaidSchemes durchzuführen ist, d.h., welcher nicht den Erwerb einer vorgenannten PrepaidKarte erfordert, und welcher - falls mit ec- oder Kreditkarte gezahlt wird - sicher, d. h. vor Missbrauch durch Dritte geschützt, ist.

Zur Lösung dieser Aufgabe schlägt die Erfindung ein Verfahren vor, bei welchem ein Automat durch einen Nutzer zur Durchführung eines Zahlungsvorgangs für einen Internetkauf zwischen dem Nutzer und einem E-Commerce-Anbieter genutzt wird, wobei der E-Commerce-Anbieter oder der Automat einen Identifikationscode für einen Zahlungsvorgang von einem Hintergrundsystem anfordert, wobei das Hintergrundsystem einen den Internetkauf identifizierenden Identifikationscode vergibt und an den E-Commerce-Anbieter oder den Automaten übermittelt, wobei der E-Commerce-Anbieter oder der Automat den Identifikationscode und/oder eine Zahlungsaufforderung an den Nutzer übermittelt, der Nutzer eine Zahlung an dem Automaten ausführt, wobei die Zahlung bargeldlos oder mittels Bargeld erfolgt, und wobei bargeldlose Zahlungen über das Zahlungssystem des Automaten durchgeführt werden, der Automat eine Zahlungsbestätigung an das Hintergrundsystem sendet und wobei anschließend eine Verrechnung der Zahlung zwischen dem Automaten und zwischen dem Hintergrundsystem und dem Hintergrundsystem und einem Empfängerkonto erfolgt. Dabei wird für das erfindungsgemäße Verfahren ein Automat genutzt, beispielsweise ein Fahrkartenautomat, der an häufig frequentierten Orten wie zum Beispiel Bahnhöfen oder innerstädtischen Verkehrsknotenpunkten ganztägig öffentlich zur Verfügung steht. Der Erfindung liegt somit die Idee zugrunde, solche "gewöhnlichen" Verkaufsautomaten, die von jedermann gut erreichbar sind, aber einen großen Teil der Tageszeit nicht in Benutzung sind, zusätzlich auch für die Durchführung von Zahlungsvorgängen zu nutzen.

Der Automat dient dabei quasi als Inkassoinstrument für die Bezahlung von Waren, welche im Internet gekauft wurden. Dabei kann die Nutzung dieses Inkassoinstruments vollkommen anonym und unabhängig von der Frage genutzt werden, ob der Nutzer über eine Bankverbindung oder eine Kreditkarte verfügt. Dafür steht dem Nutzer neben der bargeldlosen Zahlung am Automaten, beispielsweise mittels einer ec- oder Kreditkarte, auch die Zahlung mittels Bargeld zur Verfügung. Falls der Kunde bargeldlos mittels ec- oder Kreditkarte zahlt, wird für den Zahlungsvorgang vorteilhaft das vorhandene sichere Zahlungssystem des Automaten genutzt.

Für die Betreiber solcher Verkaufsautomaten ergibt sich durch die Erfindung zudem der Vorteil, dass die Automaten eine höhere Nutzungsfrequenz erhalten, wodurch der Betrieb solcher Automaten insgesamt gewinnbringender erfolgen kann. Der Vorteil für den Nutzer ist dabei, dass er den Zahlungsvorgang für einen Internetkauf jederzeit an einem entsprechend eingerichteten Automaten durchführen kann, ohne dafür eine Bankverbindung oder Kreditkarte im Internet verwenden zu müssen. Er kann auf alle seitens des Automaten ohnehin verfügbaren Zahlarten zurückgreifen, d.h. typischerweise einschließlich Barzahlung.

Der Zahlungsvorgang wird erfindungsgemäß dadurch ausgeführt, dass ein Hintergrundsystem einen Identifikationscode generiert, welcher eine eineindeutige Zuordnung von Zahlung und Internetkauf ermöglicht. Ebenso ermöglicht der vom Hintergrundsystem vergebene Identifikationscode eine eineindeutige Zuordnung von Zahlung und der späteren Verrechnung auf dem Empfängerkonto. Somit wird durch ein und denselben Identifikationscode sichergestellt, dass jederzeit die exakte Zuordnung der Zahlung am Automaten zu dem Internetkauf bzw. der Gutschrift auf dem Empfängerkonto gegeben ist. Gleichzeitig ersetzt dieser Identifikationscode ebenfalls jede Form von Prepaid-Karte, da der Nutzer den für einen Internetkauf zu nutzenden Geldbetrag nicht auf die Prepaid-Karte einzahlt, sondern auf ein Konto einer Verrechnungsstelle des Hintergrundsystems, wobei als Referenz lediglich der Identifikationscode dient.

Eine erste bevorzugte Ausführungsform der Erfindung sieht dabei vor, dass der E-Commerce-Anbieter den von dem Hintergrundsystem vergebenen Identifikationscode an den Nutzer übermittelt. Zur Ausführung der Zahlung übermittelt der Nutzer diesen Identifikationscode anschließend an einen Automaten. Der Automat wiederum übermittelt sodann den Identifikationscode an das Hintergrundsystem, wobei das Hintergrundsystem den Identifikationscode verifiziert und die Höhe des zu dem Internetkauf korrespondierenden Geldbetrages an den Automaten übermittelt, wobei der Automat anschließend die Höhe des zu zahlenden Geldbetrages dem Nutzer, beispielsweise auf einem Display, anzeigt.

Gemäß dieser ersten Ausführungsvariante tätigt der Nutzer wie üblich einen Internetkauf über eine E-Commerce-Internetseite. Anschließend erhält der Nutzer gemäß der Erfindung nach Abschluss des Kaufvorgangs einen eineindeutigen Identifikationscode vom dem E-Commerce-Anbieter, beispielsweise auf dem Bildschirm seines Computers, per Email oder per SMS, wobei der Identifikationscode sowohl in Klarschrift als auch in maschinenlesbarer Form, beispielsweise als 1- oder 2-dimensionaler Strichcode, ausgegeben werden kann, wobei die maschinenlesbare Form bevorzugt auch für den Nutzer ausdruckbar sein kann. Diesen Identifikationscode gibt er dann später an einem Automaten an, um den Gegenwert für diesen Internetkauf per Bargeld, durch Kreditkarte oder ec-Karte zu bezahlen. Die Eingabe des Identifikationscodes erfolgt dabei über die an diesem Automaten verfügbaren Eingabemittel, wie z. B. einen berührungsempfindlichen Bildschirm, ein PIN-Pad oder auch einen Strichcodeleser zum Einlesen maschinenlesbarer Codes.

Den Identifikationscode bezieht der E-Commerce-Anbieter dabei wiederum von einem rechnerbasierten Hintergrundsystem, das als Verrechnungsstelle zwischen den Automatenbetreibern und den E-Commerce-Anbietern funktioniert. Der Identifikationscode ist eineindeutig, d.h. denselben Identifikationscode gibt das Hintergrundsystem für offene Zahlungen nur einmal aus. Das Hintergrundsystem ordnet dem jeweiligen Identifikationscode den fälligen Betrag eindeutig zu. Der Internetserver des E-Commerce-Anbieters wiederum speichert zu dem getätigten Internetkauf den vom Hintergrundsystem erhaltenen Identifikationscode und wartet auf den vom Nutzer an einem Automaten durchgeführten Zahlungsvorgang, welcher durch das Hintergrundsystem vermittelt wird. Der Nutzer verwendet zur Durchführung des Zahlungsvorgangs einen Automaten, an welchem der erfindungsgemäße Zahlungsvorgang ausgeführt werden kann. Dazu wählt der Benutzer am Automaten beispielsweise die erfindungsgemäße Funktion "Internetzahlung" und gibt auf Aufforderung über die Benutzerschnittstelle des Automaten, z.B. einen berührungsempfindlichen Bildschirm oder eine Tastatur, den Identifikationscode ein, für welchen er eine Bezahlung tätigen will. Daraufhin fragt der Automat beim Hintergrundsystem an, welcher Betrag für den eingegebenen Identifikationscode zu entrichten ist. Dieser Betrag wird dem Nutzer beispielsweise auf einem Display des Automaten angezeigt, wobei dem Nutzer gleichzeitig zur Durchführung des Zahlungsvorgangs alle Zahlungsmittel angeboten werden, die automatenseitig ohnehin - also unabhängig vom erfindungsgemäßen Verfahren - zur Verfügung stehen. Nach erfolgreicher Durchführung des Zahlungsvorgangs erhält der Nutzer von dem Automaten eine entsprechende Meldung und/oder vorteilhaft einen schriftlichen Beleg. Gleichzeitig oder auch zeitversetzt zum Zahlungsvorgang sendet der Automat dem Hintergrundsystem eine Information darüber, dass zu einem bestimmten Identifizierungscode ein bestimmter Betrag eingegangen ist. Anhand des Identifikationscodes vergleicht das Hintergrundsystem den vom Automaten gemeldeten Betrag mit dem vom Internetserver des E-Commerce-Anbieters geforderten Betrag. Wenn der gezahlte Betrag zumindest den geforderten Betrag erreicht, bestätigt das Hintergrundsystem dem Internetserver des E-Commerce-Anbieters durch eine elektronische Information die vollständige Bezahlung für den zu diesem Identifikationscode gehörenden Internetkauf. Der E-Commerce-Anbieter registriert sodann die vollständige Bezahlung des zum Identifikationscode gehörigen Vorgangs und liefert die Ware bzw. die bestellte Dienstleistung an den Nutzer.

Anschließend erfolgt die Verrechnung der Zahlung zwischen dem Automaten und dem Hintergrundsystem bzw. dem Hintergrundsystem und einem Empfängerkonto, welches in diesem Fall das Konto des E-Commerce-Anbieters ist. Auf diese Weise werden die vom Automaten eingenommenen Geldbeträge zwischen der Verrechnungsstelle (dem Betreiber des erfindungsgemäßen Hintergrundsystems) und dem Automatenbetreiber bzw. dem E-Commerce-Anbieter verrechnet.

Gemäß einer zweiten Ausführungsform der Erfindung ist das Verfahren zur Nutzung eines Automaten durch einen Nutzer zur Durchführung eines Zahlungsvorgangs so ausgebildet, dass der Nutzer an den Automaten eine Information über ein Zahlungsempfängerkonto übermittelt. Bei diesem Zahlungsempfängerkonto kann es sich vorteilhaft um ein eigenes Konto des Nutzers handeln. Hierbei kommt insbesondere ein Internetkonto wie beispielsweise ein PayPal-Konto in Frage. Neben dieser "Aufladung" eines eigenen Kontos ist jedoch alternativ auch die Gutschrift eines Geldbetrages auf einem fremden Empfängerkonto, beispielsweise einem Konto eines E-Commerce-Anbieters, möglich. Nachdem der Nutzer erfindungsgemäß an einem Automaten den Zahlungsvorgang durchgeführt hat, verrechnet das Hintergrundsystem nach Erhalt der Zahlungsbestätigung von dem Automaten eine Gutschrift auf das Zahlungsempfängerkonto.

Zur Ausführung dieser zweiten Ausführungsform der Erfindung verfügt der Nutzer folglich über ein persönliches Konto für elektronisches Geld, das beispielsweise im Internet geführt wird wie ein PayPal- oder Skrill-Konto. Ebenfalls kann mit dem Begriff "Zahlungsempfängerkonto" auch eine Wertkarte wie z.B. eine PaySafeCard, eine U-KashCard oder eine 3V-Cash-Card gemeint sein. Um nun dieses Konto oder diese Karte an einem Automaten " aufzuladen" wählt der Benutzer an dem jeweiligen Automat die erfindungsgemäße Funktion "Aufladen" und gibt auf Anforderung des Automaten über die Benutzerschnittstelle ein, für welches Konto oder für welche Karte er einen Zahlungsvorgang tätigen will. Anschließend fragt der Automat beim Hintergrundsystem an, ob dieses Konto oder diese Karte existiert und ob Zahlungsvorgänge möglich sind. Über die Benutzerschnittstelle des Automaten kann der Nutzer wählen, in welcher Höhe er einen Zahlungsvorgang durchführen möchte. Der Automat führt den Benutzer anschließend durch den Ablauf des Zahlungsvorgangs, wobei dem Nutzer alle Zahlungsmittel angeboten werden, die an dem jeweiligen Automaten zur Verfügung stehen. Sofern der Nutzer beispielsweise die Barzahlung wählt, übergibt der Nutzer während des Zahlungsvorganges eine entsprechende Geldmenge an den Automaten. Mit Ende des Zahlungsvorgangs erhält der Nutzer am Automaten eine entsprechende Meldung undloder einen schriftlichen Beleg. Gleichzeitig oder auch zeitversetzt sendet der Automat dem Hintergrundsystem eine elektronische Information darüber, dass zu einem bestimmten Empfängerkonto oder einer bestimmten Karte ein bestimmter Betrag eingegangen ist. Anhand des vom Hintergrundsystem mitgeteilten Identifikationscodes erhöht der Betreiber des Empfängerkontos oder der Karte den Saldo des jeweiligen Kontos entsprechend. Das elektronische Geld kann nunmehr in der gewohnten Weise zur Durchführung von Internetkäufen bei E-Commerce-Anbietern verwendet werden. Schließlich sieht eine dritte Ausführungsform der Erfindung ein Verfahren zur Nutzung eines Automaten durch einen Nutzer zur Durchführung eines Zahlungsvorgangs vor, bei welchem der vom Hintergrundsystem an den Automaten übermittelte Identifikationscode eine eindeutige Zuordnung des eingezahlten Betrags ermöglicht.

Diese dritte Ausführungsform ist darauf ausgerichtet, dass der Nutzer am Automaten eine Wertkarte oder einen Einkaufsgutschein erwirbt bzw. bezahlt, welchen er für Internetkäufe bei am Verfahren teilnehmenden E-Commerce-Anbietern nutzen kann. Der vom Hintergrundsystem über den Automaten an den Nutzer weitergegebene Identifikationscode dient dabei als Gegenwert, d.h. Gutschein, für die eingezahlte Geldsumme. Im Sinne der Erfindung findet der Internetkauf zeitlich nach der Übermittlung des Identifikationscodes und/oder der Zahlung des Nutzers an dem Automaten statt. Zur Bezahlung des Internetkaufs verwendet der Nutzer den Identifikationscode als Zahlungsmittel gegenüber dem E-Commerce-Anbieter.

Zur Durchführung dieser dritten Ausführungsform wählt der Nutzer am Automaten die erfindungsgemäße Funktion "Erwerb eines Gutschein" und gibt auf Aufforderung über die Benutzerschnittstelle des Automaten ein, über welchen Geldbetrag er einen Gutschein erwerben möchte. Anschließend fordert der Automat vom Hintergrundsystem einen eineindeutigen Identifikationscode an, welcher als Referenz für den erworbenen Einkaufsgutschein dient. Der Nutzer führt nun den Zahlungsvorgang wie zuvor beschrieben an dem Automaten aus. Dabei stehen dem Nutzer wiederum alle vom Automaten angebotenen Zahlungsmittel zur Verfügung. Nach erfolgreich durchgeführtem Zahlungsvorgang erhält der Nutzer von dem Automaten eine entsprechende Mitteilung und/oder einen schriftlichen Beleg. Anschließend sendet der Automat dem Hintergrundsystem eine elektronische Information darüber, dass zu einem bestimmten Identifikationscode ein bestimmter Geldbetrag eingegangen ist. Der Identifikationscode identifiziert dabei den jeweiligen Einkaufsgutschein, den der Nutzer verwenden kann, um Internetkäufe bei einem E-Commerce-Anbieter zu tätigen. Nach Durchführung des Internetkaufs wird zur Durchführung des Zahlungsvorgangs eine Verrechnung zwischen dem Hintergrundsystem, d.h. der Verrechnungsstelle, und dem E-Commerce-Anbieter durchgeführt.

Im Folgenden werden die drei Ausführungsformen der Erfindung anhand der Figuren beispielhaft näher erläutert. Es zeigen:
Fig. 1 Blockdiagramm gemäß der ersten Ausführungsform der Erfindung,
Fig. 2 Blockdiagramm gemäß der zweiten und dritten Ausführungsform der Erfindung

In den Figuren werden die einzelnen Verfahrensschritte durch Pfeile 1 - 19 dargestellt.

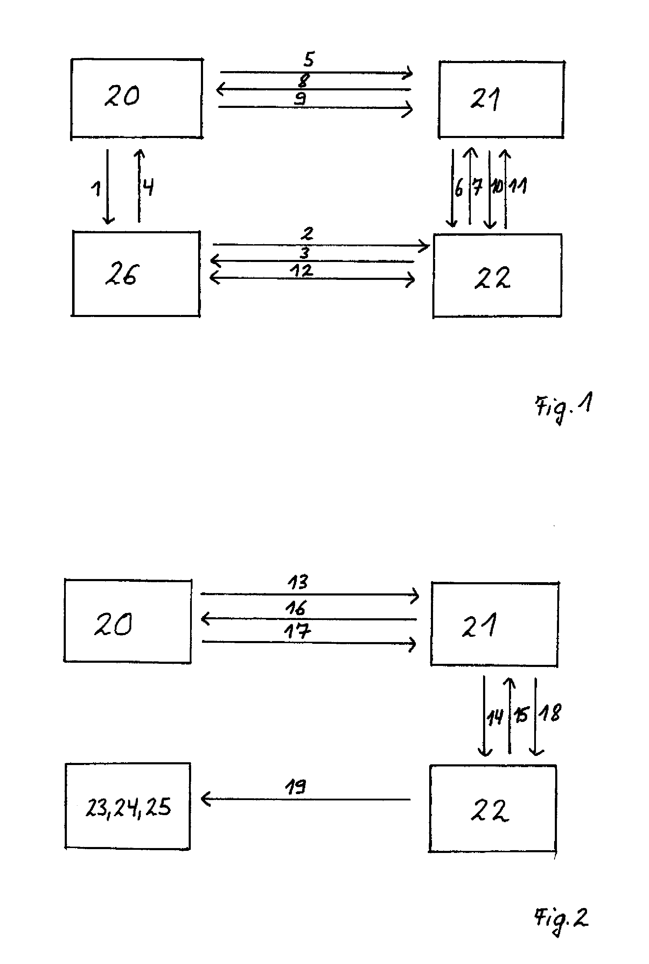

Fig. 1 stellt die erste Ausführungsform der Erfindung dar, bei welcher nach Tätigung eines Internetkaufs eine Bezahlung des Nutzers 20 an einem Automaten 21 stattfindet. Dabei stehen der Nutzer 20, der Automat 21, das Hintergrundsystem 22 und der E-Commerce-Anbieter 26 miteinander in Wechselwirkung.

Zur Durchführung der ersten Ausführungsform tätigt der Nutzer 20 einen Internetkauf 1 bei dem E-Commerce-Anbieter 26. Anschließend fordert der E-Commerce-Anbieter 26 - beim Hintergrundsystem 22 einen Identifikationscode an 2. Das Hintergrundsystem 22 sendet einen Identifikationscode an den E-Commerce-Anbieter 23, 3, welchen der E-Commerce-Anbieter 26 wiederum an den Nutzer 20 übermittelt 4. Diesen Identifikationscode nutzt der Nutzer 20 anschließend an einem dafür vorgesehenen Automaten 21, wobei der Nutzer 20 seinen Identifikationscode an den Automaten 21 übergibt 5. Anschließend fragt der Automat 21 beim Hintergrundsystem 22 an, welcher Betrag zu diesem Identifikationscode gehört 6. Das Hintergrundsystem 22 verifiziert diesen Code und gibt den dazugehörigen Betrag aus 7. Der Automat 21 gibt diesen vom Hintergrundsystem 22 angefragten Betrag an den Nutzer 20 aus 8. Daraufhin bezahlt der Nutzer 20 den geforderten Geldbetrag bar oder auch bargeldlos mittels beispielsweise einer ec- oder Kreditkarte 9. Daraufhin sendet der Automat eine Mitteilung über den Zahlungsvorgang an das Hintergrundsystem 22, 10. Anschließend erfolgt eine Verrechnung zwischen dem Automat 21 und dem Hintergrundsystem 22, 11 bzw. zwischen dem Hintergrundsystem und dem E-Commerce-Anbieter 26, 12.

Gemäß der zweiten Ausführungsform der Erfindung, dargestellt in Fig. 2, gibt der Nutzer 20 in einem ersten Verfahrensschritt eine Information über ein Zahlungsempfängerkonto 23 (oder eine Empfängerkarte 24) an den Automaten 21, 13. Anschließend gibt der Automat 21 diese Kontonummer an das Hintergrundsystem 22 weiter und fordert einen Identifikationscode an 14. Daraufhin bestätigt das Hintergrundsystem 22 das angegebene Empfängerkonto 23 (bzw. die Empfangskarte 24) und übermittelt einen Identifikationscode an den Automaten 21, 15. Der Automat 21 bestätigt die angegebene Empfängerkontonummer an den Nutzer 20 und übersendet ihm den Identifikationscode 16. Daraufhin führt der Nutzer 20 den Zahlungsvorgang an dem Automaten 21 durch 17.

Der Automat 21 sendet anschließend die Zahlungsbestätigung an das Hintergrundsystem 22, 18, woraufhin das Hintergrundsystem 22 den eingezahlten Geldbetrag auf dem Empfängerkonto 23 (oder der Empfängerkarte 24) gutschreibt.

Gemäß der dritten Ausführungsform der Erfindung, ebenfalls dargestellt in Fig. 2, fordert der Nutzer 20, beispielsweise über eine Funktion "Erwerb eines Gutscheins", einen Identifikationscode an dem Automaten 21, 13 an. Der Automat 21 gibt diese Anfrage an das Hintergrundsystem 22 weiter 14 und erhält einen Identifikationscode zurück 15. Dieser Identifikationscode wird dem Nutzer 20 als Gutschein 25 übergeben 16. Als Gegenleistung zahlt der Nutzer einen gewünschten Geldbetrag für die Höhe des Gutscheins 25 ein 17. Der Automat 21 sendet anschließend die Zahlungsbestätigung an das Hintergrundsystem 22, 18, woraufhin das Hintergrundsystem 22 den eingezahlten Geldbetrag als Gutschein 25 auf dem dafür bestimmten Zwischenkonto gutschreibt 19.

### Bezugszeichenliste

- 1 bis 19: Pfeil
- 20: Nutzer
- 21: Automat
- 22: Hintergrundsystem
- 23: Empfängerkonto
- 24: Empfängerkarte
- 25: Gutschein
- 26: E-Commerce-Anbieter

## Patentansprüche

1. Verfahren zur Nutzung eines Automaten (21) durch einen Nutzer (20) zur Durchführung eines Zahlungsvorgangs für einen' Internetkauf zwischen dem Nutzer (20) und einem E-Commerce-Anbieter (26), wobei
- der E-Commerce-Anbieter (26) oder der Automat (21) einen Identifikationscode für einen Zahlungsvorgang von einem Hintergrundsystem (22) anfordert,
- das Hintergrundsystem (22) einen den Internetkauf identifizierenden Identifikationscode vergibt und an den E-Commerce-Anbieter (26) oder den Automaten (21) übermittelt,
- der E-Commerce-Anbieter (26) oder der Automat (21) den Identifikationscode und/oder eine Zahlungsaufforderung an den Nutzer (20) übermittelt,
- der Nutzer (20) eine Zahlung an dem Automaten (21) ausführt, wobei die Zahlung bargeldlos oder mittels Bargeld erfolgt, und wobei bargeldlose Zahlungen über das Zahlungssystem des Automaten durchgeführt werden,
- der Automat (21) eine Zahlungsbestätigung an das Hintergrundsystem (22) sendet, und
- anschließend eine Verrechnung der Zahlung zwischen dem Automaten (21) und dem Hintergrundsystem (22) und zwischen dem Hintergrundsystem (22) und einem Empfängerkonto (23) erfolgt.

2. Verfahren nach Anspruch 1, **dadurch gekennzeichnet, dass** der vom Hintergrundsystem (22) vergebene Identifikationscode eine eineindeutige Zuordnung von Zahlung und Internetkauf ermöglicht.

3. Verfahren nach einem der Ansprüche 1 bis 2, **dadurch gekennzeichnet, dass** der vom Hintergrundsystem (22) vergebene Identifikationscode eine eineindeutige Zuordnung von Zahlung und Verrechnung der Zahlung auf dem Empfängerkonto (23) ermöglicht.

4. Verfahren nach einem der Ansprüche 1 bis 3, **dadurch gekennzeichnet, dass** der E-Commerce-Anbieter (26) den von dem Hintergrundsystem (22) vergebenen Identifikationscode an den Nutzer (20) übermittelt.

5. Verfahren nach Anspruch 4, **dadurch gekennzeichnet, dass** der Nutzer (20) zur Ausführung der Zahlung den Identifikationscode an den Automaten (21) übermittelt.

6. Verfahren nach Anspruch 5, **dadurch gekennzeichnet, dass** der Automat (21) den Identifikationscode an das Hintergrundsystem (22) übermittelt, wobei das Hintergrundsystem (22) anschließend den Identifikationscode verifiziert und die Höhe des zu dem Internetkauf korrespondierenden Geldbetrags an den Automaten (21) übermittelt, wobei anschließend der Automat (21) die Höhe des Geldbetrags dem Nutzer (20) anzeigt.

7. Verfahren nach einem der Ansprüche 1 bis 3, **dadurch gekennzeichnet, dass** der Nutzer (20) an den Automaten (21) eine Information über ein Zahlungsempfängerkonto (23) übermittelt.

8. Verfahren nach Anspruch 7, **dadurch gekennzeichnet, dass** das Hintergrundsystem (22) nach Erhalt der Zahlungsbestätigung von dem Automaten (21) eine Gutschrift auf dem Zahlungsempfängerkonto (23) verrechnet.

9. Verfahren nach Anspruch 7 oder 8, **dadurch gekennzeichnet, dass** das Zahlungsempfängerkonto (23) ein eigenes Konto des Nutzers (20) ist.

10. Verfahren nach einem der Ansprüche 1 bis 3, **dadurch gekennzeichnet, dass** der vom Hintergrundsystem (22) an den Automaten (21) übermittelte Identifikationscode eine eindeutige Zuordnung des eingezahlten Betrags ermöglicht.

11. Verfahren nach Anspruch 10, **dadurch gekennzeichnet, dass** der Internetkauf zeitlich nach der Übermittlung des Identifikationscodes und/oder der Zahlung des Nutzers (20) an dem Automaten (21) erfolgt.

12. Verfahren nach Anspruch 10 oder 11, **dadurch gekennzeichnet, dass** der Nutzer (20) den Identifikationscode bei einem Internetkauf zwischen dem Nutzer (20) und einem E-Commerce-Anbieter (26) als Zahlungsmittel verwendet.
